# EUROPÄISCHE PATENTSCHRIFT

(11) **EP 2 290 277 B1**
(45) Veröffentlichungstag und Bekanntmachung des Hinweises auf die Patenterteilung: **11.01.2017**
(21) Anmeldenummer: 10170035.9
(22) Anmeldetag: 19.07.2010
(51) Int. Cl.: F16L 3/233, H02G 3/32, F16B 21/08

(54) **Vorrichtung zum Befestigen eines Kabelbandes an einem Trägerteil**
Device for securing a cable tie on a carrier section
Dispositif de fixation d'un collier de serrage sur un élément de support

(30) Priorität: 26.08.2009 DE 102009038911
(43) Veröffentlichungstag der Anmeldung: 02.03.2011
(73) Patentinhaber: A. RAYMOND et Cie, 38000 Grenoble (FR)
(72) Erfinder: Hauser, Ingo, 79400, Kandern (DE); Tremmel, Günter, 79739, Schwörstadt (DE)
(74) Vertreter: Tilmann, Max Wilhelm

(56) Entgegenhaltungen:
- DE-A1- 19 629 917
- DE-U1- 29 510 606
- JP-A- H07 190 029

## Beschreibung

Die Erfindung betrifft eine Vorrichtung zum Befestigen eines Kabelbandes an einem Trägerteil gemäß dem Oberbegriff des Patentanspruches 1.

Eine derartige Vorrichtung ist aus JP H07 190029 A bekannt. Die vorbekannte Vorrichtung zum Befestigen eines Kabelbandes an einem Trägerteil ist mit einem in eine in dem Trägerteil eingebrachte Einsteckausnehmung einsteckbaren, das Kabelband tragenden Befestigungskörper ausgestattet, an dem wenigstens ein federnder Rastschenkel zum Hintergreifen der Einsteckausnehmung ausgebildet ist. Bei der gattungsgemäßen Vorrichtung weist der Befestigungskörper eine Außenhülse sowie eine in die Außenhülse eingeschobene sowie in der Außenhülse verschiebbare Innenhülse auf. Die Innenhülse trägt über eine an der Innenhülse angebrachte Trägerplatte zwei Kabelbänder, die außenseitig an der Trägerplatte angeordnet sind. Zum Einsatz der gattungsgemäßen Vorrichtung mit Trägerteilen unterschiedlicher Materialstärke sind an der Außenhülse in Richtung der Rastschenkel weisende Federzungen vorgesehen.

Eine weitere Vorrichtung zum Befestigen eines Kabelbandes an einem Trägerteil ist aus DE 295 10 606 U1 bekannt. Diese vorbekannte Vorrichtung zum Befestigen eines Kabelbandes an einem Trägerteil verfügt über einen das Kabelband tragenden Befestigungskörper, der in eine in dem Trägerteil eingebrachte Einsteckausnehmung einsteckbar ist. An dem Befestigungskörper sind zwei federnde Rastschenkel zum Hintergreifen der Einsteckausnehmung ausgebildet. Dadurch ist das Kabelband an dem Trägerteil befestigt, sobald die Vorrichtung bestimmungsgemäß in die Einsteckausnehmung des Trägerteils eingesteckt worden ist.

Aus DE 196 29 917 A1 ist eine Vorrichtung zum Befestigen einer einen Kugelkopf aufweisenden Stange an einem Trägerteil offenbart, die über eine eine Außenhülse und eine in die Außenhülse einschiebbare, mit dem Trägerteil verrastbare und den Kugelkopf fixierende Innenhülse verfügt.

Der Erfindung liegt die Aufgabe zugrunde, eine Vorrichtung der eingangs genannten Art anzugeben, die sich in verhältnismäßig einfacher Art und Weise auch bei Trägerteilen mit sehr unterschiedlichen Materialstärken einsetzen lässt.

Diese Aufgabe wird bei einer Vorrichtung der eingangs genannten Art erfindungsgemäß mit den kennzeichnenden Merkmalen des Patentanspruches 1 gelöst.

Dadurch, dass bei der erfindungsgemäßen Vorrichtung das Kabelband bei Anziehen die Rastschenkel gegen das Trägerteil verspannt, lässt sich die zweckmäßigerweise über lösbare Vorfixiermittel in einer Vormontagestellung relativ fest miteinander verbundene Einheit aus Außenhülse und Innenhülse in die Einsteckausnehmung eines Trägerteiles einführen sowie durch

Verschieben der Innenhülse in Bezug auf die Außenhülse an die jeweilige Materialstärke des Trägerteiles über einen verhältnismäßig großen Bereich anpassen, indem sich gegebenenfalls nach einem weiteren Durchschieben über die Vorfixierstellung hinaus bei Anziehen des Kabelbandes die Innenhülse an dem Trägerteil festzieht.

Weitere zweckmäßige Ausgestaltungen der Erfindung sind Gegenstand der Unteransprüche.

Weitere zweckmäßige Ausgestaltungen und Vorteile der Erfindung ergeben sich mit Bezug auf die Figuren der Zeichnung aus der nachfolgenden Beschreibung von Ausführungsbeispielen.

Es zeigen:
- Fig. 1: in einer perspektivischen Ansicht ein Ausführungsbeispiel einer erfindungsgemäßen Vorrichtung mit einer Außenhülse und mit einer Innenhülse, an der ein Kabelband lose anbringbar ist,
- Fig. 2: das Ausführungsbeispiel gemäß Fig. 1 mit der in die Außenhülse eingeschobenen Innenhülse und mit dem mit der Innenhülse verbundenen Kabelband,
- Fig. 3: in einer Schnittansicht die Anordnung gemäß Fig. 2 in einer in einer Einsteckausnehmung eines Trägerteils eingefügten Anordnung,
- Fig. 4: in einer Schnittansicht die Anordnung gemäß Fig. 3 mit dem ein Kabelbündel umschlingenden Kabelband,
- Fig.5: in einer perspektivischen Ansicht ein weiteres Ausführungsbeispiel einer erfindungsgemäßen Vorrichtung mit einer Außenhülse und mit einer Innenhülse,
- Fig. 6: in einer perspektivischen Ansicht das Ausführungsbeispiel gemäß Fig. 5 mit der in die Außenhülse eingeschobenen Innenhülse und mit einem mit der Innenhülse lose verbundenen Kabelband,
- Fig. 7: in einer Schnittansicht die Anordnung gemäß Fig. 6 mit einer in einer Einsteckausnehmung eines Trägerteiles eingefügten Außenhülse und mit der Innenhülse in einer Vormontagestellung,
- Fig. 8: in einer Schnittansicht die mit dem Trägerteil verbundene Anordnung gemäß Fig. 6 und Fig. 7 mit einem ein Kabelbündel umschlingenden Kabelband,
- Fig. 9: in einer perspektivischen Ansicht ein weiteres Ausführungsbeispiel einer erfindungsgemäßen Vorrichtung mit einer Außenhülse und mit einer Innenhülse, an der zwei Teile eines Kabelbandes fest angebracht sind,
- Fig. 10: in einer perspektivischen Ansicht die Außenhülse bei dem Ausführungsbeispiel gemäß Fig. 9,
- Fig. 11: in einer perspektivischen Ansicht die Innenhülse bei dem Ausführungsbeispiel gemäß Fig. 9,
- Fig. 12: in einer perspektivischen Ansicht das Ausführungsbeispiel gemäß Fig. 9 mit der in die Außenhülse eingeschobenen Innenhülse,
- Fig. 13: in einer Schnittansicht das Ausführungsbeispiel gemäß Fig. 9 mit der in die Außenhülse eingeschobenen Innenhülse und mit der Innenhülse in einer in eine Einsteckausnehmung eines Trägerteiles eingesteckten Anordnung, wobei die Innenhülse in einer Vormontagestellung ist,
- Fig. 14: in einer Schnittansicht die Anordnung gemäß Fig. 13 mit dem ein Kabelbündel umschlingenden Kabelband und mit der Innenhülse in einer Endmontagestellung,
- Fig. 15: in einer perspektivischen Ansicht ein weiteres Ausführungsbeispiel einer erfindungsgemäßen Vorrichtung mit einer Außenhülse, mit einer in die Außenhülse einschiebbaren Innenhülse und mit einem Rastkäfig, wobei ein Kabelband fest mit der Innenhülse verbunden ist,
- Fig. 16: in einer perspektivischen Ansicht das Ausführungsbeispiel gemäß Fig. 15 mit der Außenhülse, der Innenhülse und dem Rastkäfig in einer zusammengefügten Anordnung,
- Fig. 17: in einer Schnittansicht die Anordnung gemäß Fig. 16 bei dem Ausführungsbeispiel gemäß Fig. 15, wobei die Außenhülse in eine in einem Trägerteil ausgebildete Einsteckausnehmung eingesteckt ist und sich die Innenhülse in einer Vormontagestellung befindet, und
- Fig. 18: die Anordnung gemäß Fig. 17 bei dem Ausführungsbeispiel gemäß Fig. 15 mit einem ein Kabelbündel umschlingenden Kabelband und mit der Innenhülse in einer Endmontagestellung.

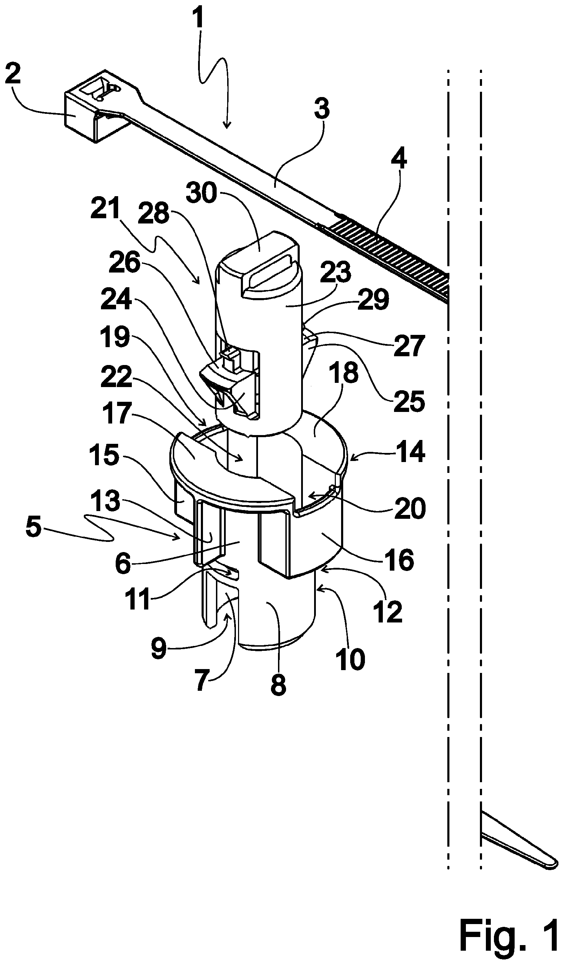

Fig. 1 zeigt in einer perspektivischen Ansicht ein Ausführungsbeispiel einer erfindungsgemäßen Vorrichtung zum Befestigen eines Kabelbandes 1 an einem in der Darstellung gemäß Fig. 1 nicht dargestellten Trägerteil. Das Kabelband 1 ist in an sich bekannter Art und Weise an einem Ende mit einem Schloss 2 ausgebildet, an das ein glatter Bandabschnitt 3 angeformt ist. Auf der dem Schloss 2 abgewandten Seite des glatten Bandabschnittes 3 ist ein mit Zähnen versehener Bandabschnitt 4 ausgebildet.

Die erfindungsgemäße Vorrichtung verfügt über eine Außenhülse 5, die eine hohlzylinderartige Hülsenwand 6 aufweist. An einem axialen Ende der Hülsenwand 6 sind zwei einander gegenüber liegende Fußzungen 7, 8 angeformt, zwischen denen zwei Schenkelaufnahmeausnehmungen 9, 10 ausgebildet sind, die sich in Längsrichtung der Außenhülse 5 erstrecken und auf der der Hülsenwand 6 abgewandten Seite offen sind. In Verlängerung der Schenkelaufnahmeausnehmungen 9, 10 weist die Hülsenwand 6 sich in Umfangsrichtung erstreckende schmale Vorfixierschlitze 11, 12 von Vorfixiermitteln auf, die in einem axialen Abstand von den Schenkelaufnahmeausnehmungen 9, 10 angeordnet sind.

Auf der den Schenkelaufnahmeausnehmungen 9, 10 abgewandten Seite der Vorfixierschlitze 11, 12 sind an die Hülsenwand 6 sich in axialer Richtung erstreckende schmale Abstützstege 13, 14 vorhanden, die radial nach außen vorstehen. In Umfangsrichtung zwischen den Abstützstegen 13, 14 sind an die Hülsenwand 6 auf der Innenseite der Außenhülse 5 hohle Abstützsockel 15, 16 ausgebildet, die gegenüber den Abstützstegen 13, 14 in Umfangsrichtung verhältnismäßig groß dimensioniert sind und sich in Umfangsrichtung über einen erheblichen Teil der Fußzungen 7, 8 erstrecken.

Die Außenhülse 5 weist auf der den Schenkelaufnahmeausnehmungen 9, 10 abgewandten Seite der Abstützstege 13, 14 und der Abstützsockel 15, 16 zwei halbkreisförmige Auflagezungen 17, 18 auf, die mit ihren Rändern an den Abstützsockeln 15, 16 angrenzen und mittig durch die Abstützstege 13, 14 abgestützt sind. Die von den Fußzungen 7, 8 abgewandten Oberseiten der Auflagezungen 17, 18 sind in axialer Richtung gegenüber den den Fußzungen 7, 8 abgewandten Oberseiten der Abstützsockel 15, 16 erhaben, so dass zwischen den Auflagezungen 17, 18 Kabelbandaufnahmeräume 19, 20 ausgebildet sind.

Weiterhin ist die erfindungsgemäße Vorrichtung mit einer Innenhülse 21 ausgestattet, die im Wesentlichen zylinderförmig ausgestaltet und so dimensioniert ist, dass sie in einen von der Hülsenwand 6 und den Fußzungen 7, 8 umschlossenen Aufnahmeraum 22 der Außenhülse 5 einschiebbar ist. Die Innenhülse 21 ist mit einem Innenhülsenkorpus 23 ausgebildet, an dem bei ordnungsgemäßer Anordnung der Innenhülse 21 in Bezug auf die Außenhülse 5 an dem der Außenhülse 5 zugewandten Ende federnde Rastschenkel 24, 25 ausgebildet sind, die über radial nach außen vorstehende Hintergriffsflächen 26, 27 verfügen. An den Rastschenkeln 24, 25 sind weiterhin in axialer Richtung über die Hintergriffsflächen 26, 27 vorstehende Vorfixiernasen 28, 29 der Vorfixiermittel vorhanden, deren Abmessungen an die Dimensionen der Vorfixierschlitze 11, 12 angepasst sind.

Weiterhin ist die Innenhülse 21 auf dem den Rastschenkeln 24, 25 abgewandten Ende mit einer Kabelbandaufnahmebrücke 30 ausgestattet, durch die das Kabelband 1 durchschiebbar ist.

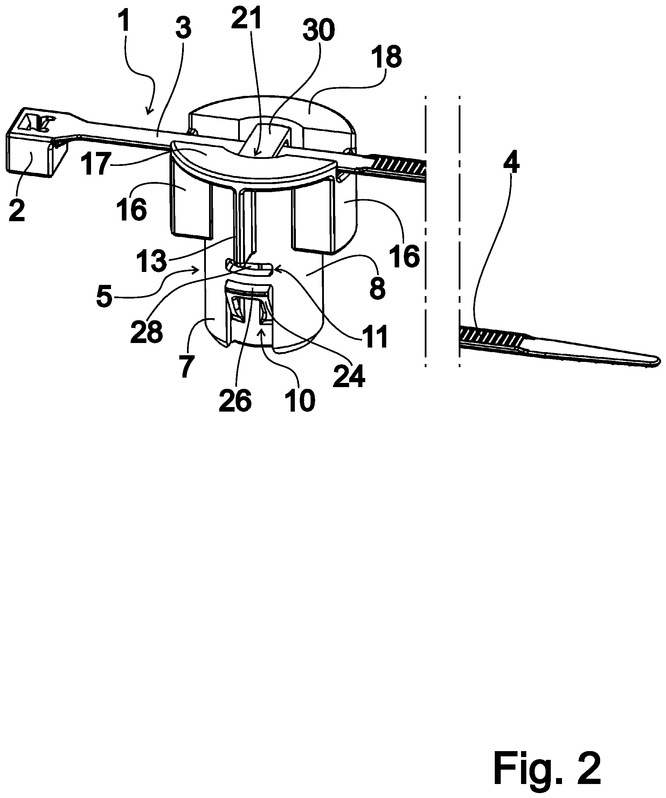

Fig. 2 zeigt in einer perspektivischen Darstellung das Ausführungsbeispiel gemäß Fig. 1 mit der Innenhülse 21 in einer in die Außenhülse 5 eingeschobenen Anordnung, in der das Kabelband 1 durch die Kabelbandaufnahmebrücke 30 durchgeführt und in den Kabelbandaufnahmeräumen 19, 20 angeordnet ist. In der in Fig. 2 dargestellten Vormontageanordnung der Innenhülse 21 in Bezug auf die Außenhülse 5 sind die Vorfixiernasen 28, 29 in den Vorfixierschlitzen 11, 12 angeordnet, während die Rastschenkel 24, 25 in die Schenkelaufnahmeausnehmungen 9, 10 eingreifen und die Hintergriffsflächen 26, 27 der Rastschenkel 24, 25 auf der den Vorfixierschlitzen 11, 12 zugewandten Randseiten der Schenkelaufnahmeausnehmungen 9, 10 anliegen. Dadurch ist in dieser Vormontageanordnung die Innenhülse 21 in der Außenhülse 5 bis zu einer gewissen Durchstoßkraft in der Außenhülse 5 fixiert.

Weiterhin ergibt sich bei entsprechender relativer Dimensionierung der Lage der Vorfixierschlitze 11, 12, der Vorfixiernasen 28, 29, der Dimension der Schenkelaufnahmeausnehmungen 9, 10 sowie der Dimension der Kabelbandaufnahmeräume 19, 20 ein gewisses Verklemmen des Kabelbandes 1 zum Ausbilden einer bei betriebstypischer Handhabung nicht direkt voneinander lösbaren Einheit von losem Kabelband 1, Außenhülse 5 und Innenhülse 21.

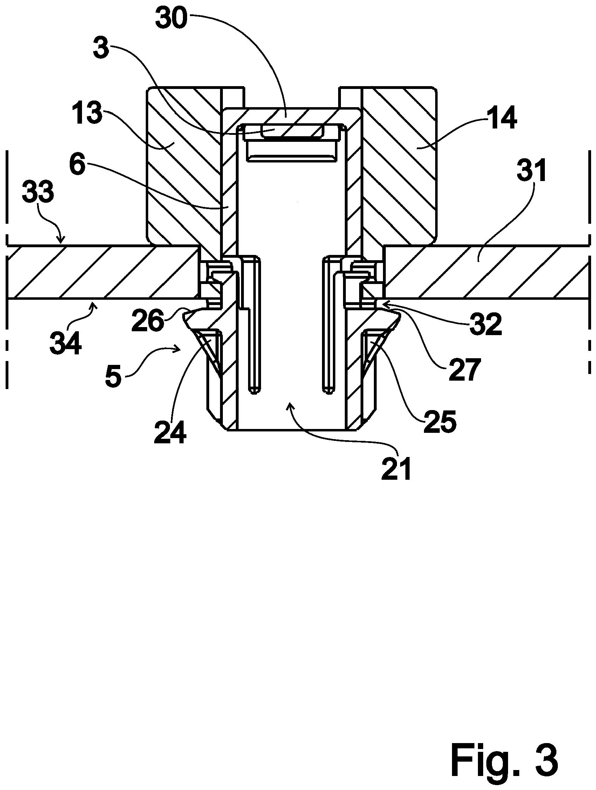

Fig. 3 zeigt in einer Schnittansicht mit einer durch die Abstützstege 13, 14 gelegten Schnittebene das Ausführungsbeispiel einer erfindungsgemäßen Vorrichtung gemäß Fig. 1 in der Vormontagestellung gemäß Fig. 2, in der die Außenhülse 5 in eine in einem Trägerteil 31 ausgebildete Einsteckausnehmung 32 eingefügt ist. In der Anordnung gemäß Fig. 3 liegen die den Fußzungen 7, 8 zugewandten Enden der Abstützstege 13, 14 und der Abstützsockel 15, 16 an einer Deckseite 33 des Trägerteiles 31 auf, während die Rastschenkel 24, 25 mit ihren Hintergriffsflächen 26, 27 eine der Deckseite 33 gegenüber liegenden Rückseite 34 des Trägerteiles 31 im Randbereich der Einsteckausnehmung 32 hintergreifen. Dadurch ist die erfindungsgemäße Vorrichtung an dem Trägerteil 31 fixiert, wobei Materialstärken des Trägerteiles 31, die größer als der Abstand zwischen den Abstützstegen 13, 14 sowie den Abstützsockeln 15, 16 und den Hintergriffsflächen 26, 27 der Rastschenkel 24, 25 sind, durch ein gegenüber der Stellung gemäß Fig. 3 weiteres Einschieben der Innenhülse 21 in die Außenhülse 5 über die Vormontagestellung hinaus ausgleichbar sind. Durch das dann weiter eingezogene Kabelband 1 ist die Innenhülse 21 in einem derartigen Fall gegen ein unbeabsichtigtes Durchschieben ausreichend gesichert, auch wenn die Vorfixiernasen 28, 29 dann nicht mehr in den Vorfixierschlitzen 11, 12 angeordnet sind.

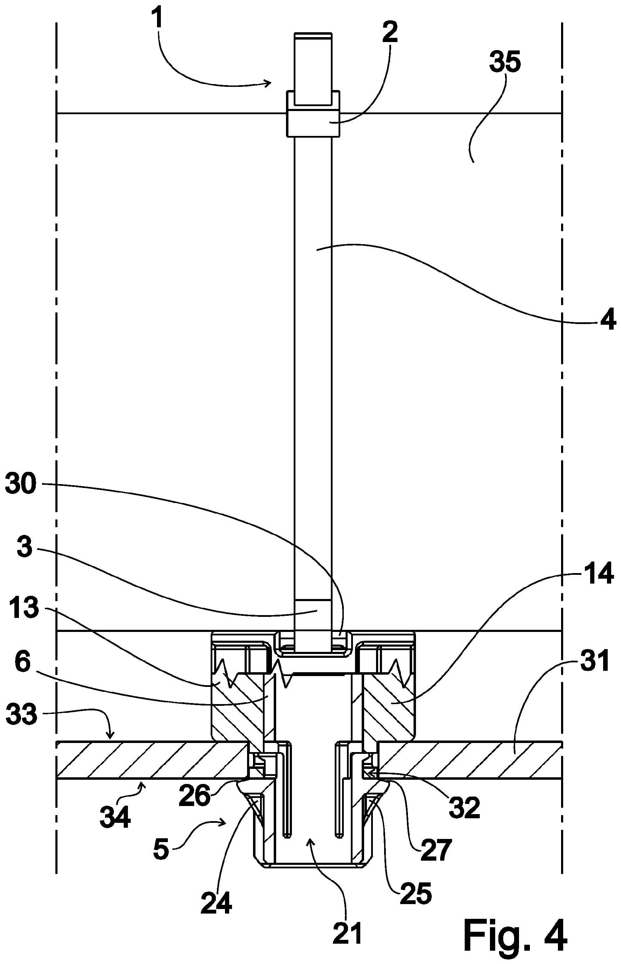

Fig. 4 zeigt in einer Schnittansicht das Ausführungsbeispiel gemäß Fig. 1 in der Anordnung gemäß Fig. 3 mit einem von dem Kabelband 1 umschlungenen Kabelbündel 35. Aus Fig. 4 ist ersichtlich, dass das Kabelbündel 35 auf den Auflagezungen 17, 18 aufliegt, so dass bei Anziehen des Kabelbandes 1 die Innenhülse 21 in Richtung der der Deckseite 33 abgewandten Seite der Außenhülse 5 gezogen wird und dadurch die Rastschenkel 24, 25 gegen das Trägerteil 31 verspannt werden. Dadurch wird ein sehr fester Sitz der erfindungsgemäßen Vorrichtung an dem Trägerteil 31 erzielt.

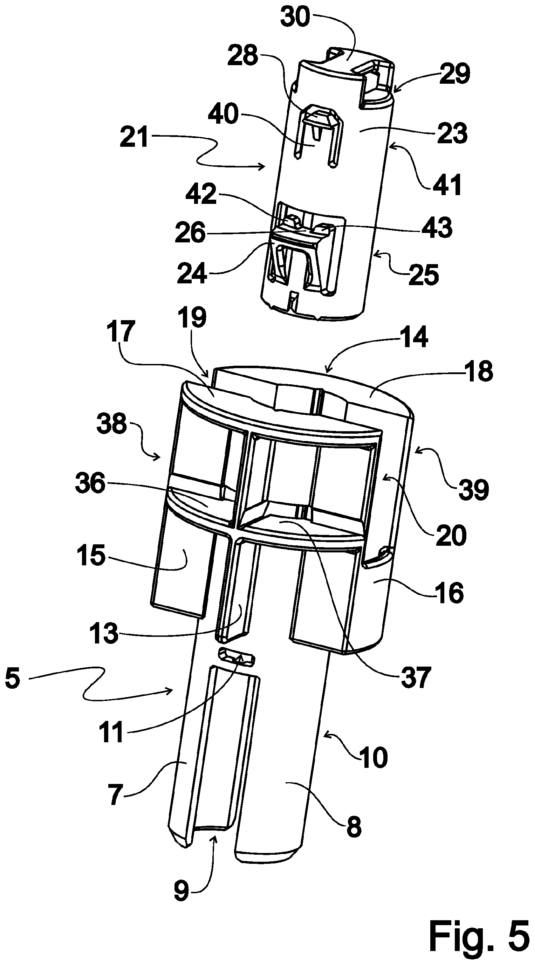

Fig. 5 zeigt in einer perspektivischen Ansicht ein weiteres Ausführungsbeispiel einer erfindungsgemäßen Vorrichtung, wobei bei dem anhand von Fig. 1 bis Fig. 4 erläuterten Ausführungsbeispiel und dem Ausführungsbeispiel gemäß Fig. 5 einander entsprechende Elemente mit den gleichen Bezugszeichen versehen und im weiteren zum Teil nicht nochmals näher erläutert sind. Entsprechend dem voranstehend erläuterten Ausführungsbeispiel verfügt auch das weitere Ausführungsbeispiel einer erfindungsgemäßen Vorrichtung gemäß Fig. 5 über eine Außenhülse 5 und über eine Innenhülse 21, die gegenüber dem anhand von Fig. 1 bis Fig. 4 erläuterten Ausführungsbeispiel in Längsrichtung größere Dimensionen aufweisen. So sind beispielsweise die Schenkelaufnahmeausnehmungen 9, 10 sowie die Kabelbandaufnahmeräume 19, 20 gegenüber dem Ausführungsbeispiel nach Fig. 1 bis Fig. 4 in Längsrichtung größer dimensioniert, wobei zum Stabilisieren der Außenhülse 5 in Längsrichtung in etwa in der Mitte der Abstützstege 13, 14 und der Abstützsockel 15, 16 sich in radialer Richtung nach außen erstreckende Zwischenzungen 36, 37, 38, 39 ausgebildet sind, die parallel zu den Auflagezungen 17, 18 liegen.

Bei der Innenhülse 21 des Ausführungsbeispieles gemäß Fig. 5 sind die Vorfixiernasen 28, 29 an federnden Nasenschenkeln 40, 41 ausgebildet, die zwischen den Rastschenkeln 24, 25 und der Kabelbandaufnahmebrücke 30 liegen.

An den Rastschenkeln 24, 25 wiederum sind in Abweichung von dem Ausführungsbeispiel gemäß Fig. 1 bis Fig. 4 an den radial innen liegenden Seiten der Hintergriffsflächen 26, 27 Anschlagnasen 42, 43 ausgebildet, die sich von der jeweiligen Hintergriffsfläche 26, 27 weg in Richtung der Kabelbandaufnahmebrücke 30 erstrecken.

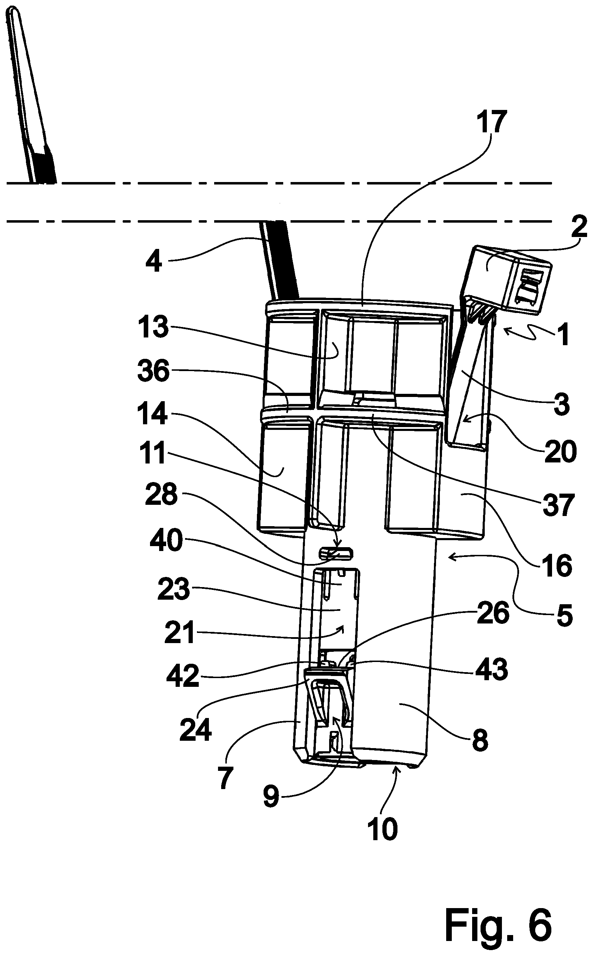

Fig. 6 zeigt in einer perspektivischen Ansicht das Ausführungsbeispiel gemäß Fig. 5 mit der in die Außenhülse 5 eingeschobenen Innenhülse 21 und mit einem durch die Kabelbandaufnahmebrücke 30 durchgeschobenen losen Kabelband 1. Die sich beidseitig der Kabelbandaufnahmebrücke 30 erstreckenden Abschnitte des Kabelbandes 1 sind in den Kabelbandaufnahmeräumen 19, 20 angeordnet. In der in Fig. 6 dargestellten Vormontagestellung sind auch bei diesem Ausführungsbeispiel die Vorfixiernasen 28, 29 in den Vorfixierschlitzen 11, 12 angeordnet, wobei bei diesem Ausführungsbeispiel die Hintergriffsflächen 26, 27 der Rastschenkel 24, 25 in einem Abstand von den den Vorfixierschlitzen 11, 12 zugewandten Randseiten der Schenkelaufnahmeausnehmungen 9, 10 liegen.

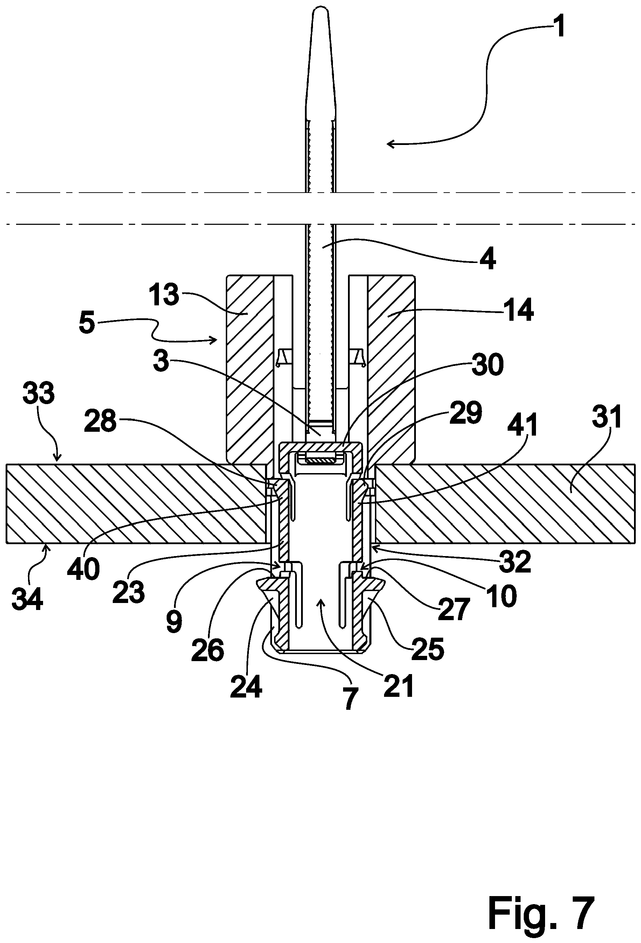

Fig. 7 zeigt in einer Schnittansicht das Ausführungsbeispiel gemäß Fig. 5 in der Anordnung gemäß Fig. 6 in der Vormontagestellung mit der in einer Einsteckausnehmung 32 eines Trägerteiles 31 eingefügten Außenhülse 5. Aus Fig. 7 ist ersichtlich, dass die Materialstärke des Trägerteiles 31 kleiner als der Abstand der aufeinander zu weisenden Seiten der Abstützstege 13, 14 sowie den Abstützsockeln 15, 16 und den Hintergriffsflächen 26, 27 der Rastschenkel 24, 25 ist. Dadurch ist bei einer durch Eingriff der Vorfixiernasen 28, 29 in die Vorfixierschlitze 11, 12 gesicherten Vormontageanordnung der Innenhülse 21 in der Außenhülse 5 die erfindungsgemäße Vorrichtung mit einem gewissen Spiel, jedoch gegen Herausfallen gesichert in der Einsteckausnehmung 32 angeordnet.

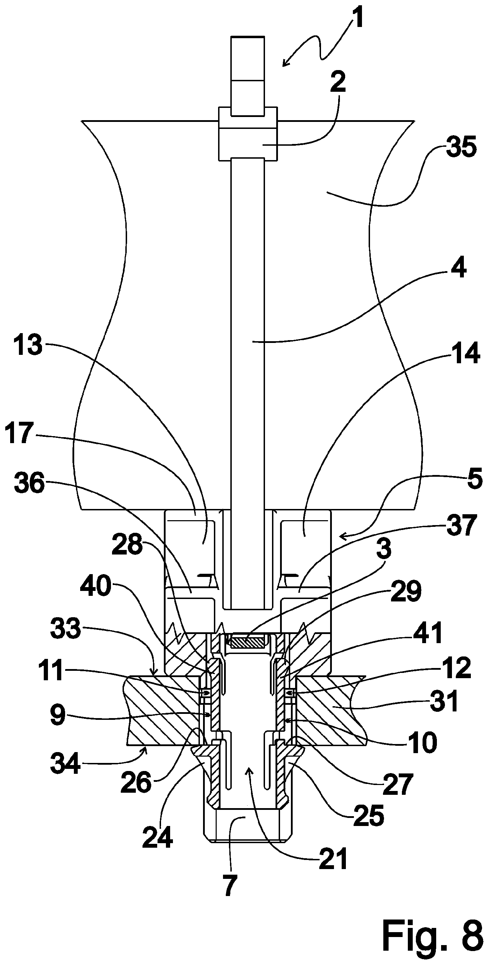

Fig. 8 zeigt in einer Schnittansicht die Anordnung gemäß Fig. 6 und Fig. 7 mit einem Kabelbündel 35, das von dem Kabelband 1 umschlungen ist. In der Anordnung gemäß Fig. 8 ist das Kabelband 1 so weit gespannt, dass die Hintergriffsflächen 26, 27 der Rastschenkel 24, 25 an der Rückseite 34 des Trägerteiles 31 im Randbereich der Einsteckausnehmung 32 fest anliegen, nachdem die Innenhülse 21 gegenüber der Außenhülse 5 in Richtung des Kabelbündels 35 verschoben worden ist. Dadurch ist bei einer verhältnismäßig großen Variabilität in der Materialstärke des Trägerteiles 31 ein unmittelbarer bestimmungsgemäßer Einsatz aus der Vormontagestellung heraus gewährleistet.

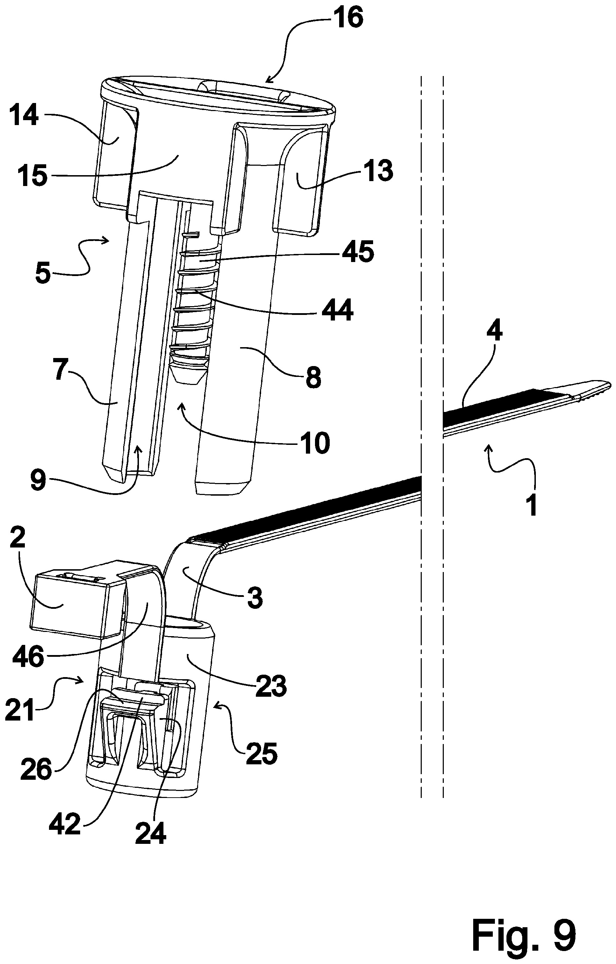

Fig. 9 zeigt in einer perspektivischen Ansicht ein weiteres Ausführungsbeispiel einer erfindungsgemäßen Vorrichtung, wobei sich bei dem Ausführungsbeispiel gemäß Fig. 1 bis Fig. 4, dem Ausführungsbeispiel gemäß Fig. 5 bis Fig. 8 und dem Ausführungsbeispiel gemäß Fig. 9 einander entsprechende Elemente mit den gleichen Bezugszeichen versehen und zum Teil im weiteren nicht näher erläutert sind. Bei dem Ausführungsbeispiel gemäß Fig. 9 weisen die Vorfixiermittel anstatt der Vorfixierschlitze 11, 12 und der Vorfixiernasen 28, 29 entsprechend den voranstehend erläuterten Ausführungsbeispielen eine Grobgewindestange 44 als Eingriffstange mit einer Außengewindestruktur 45 auf. Die Grobgewindestange 44 erstreckt sich in Längsrichtung der Außenhülse 5 und ist mittig zwischen den Fußzungen 7, 8 angeordnet. Die Innenhülse 21 ist bei dem Ausführungsbeispiel gemäß Fig. 9 fest mit einem Schlossabschnitt 46 und mit dem glatten Bandabschnitt 3 eines Kabelbandes 1 verbunden, an den der mit Zähnen versehene Bandabschnitt 4 angesetzt ist. Der Schlossabschnitt 46 und der glatte Bandabschnitt 3 sind in Längsrichtung den Rastschenkeln 24, 25 gegenüber liegend angeordnet. Der Vollständigkeit halber sei an dieser Stelle angemerkt, dass bei dem Ausführungsbeispiel gemäß Fig. 9 jeder Rastschenkel 24, 25 mit lediglich einer Anschlagnase 42 ausgestattet ist, die ein Ausfedern der Rastschenkel 24, 25 aus der Einsteckausnehmung 32 verhindern.

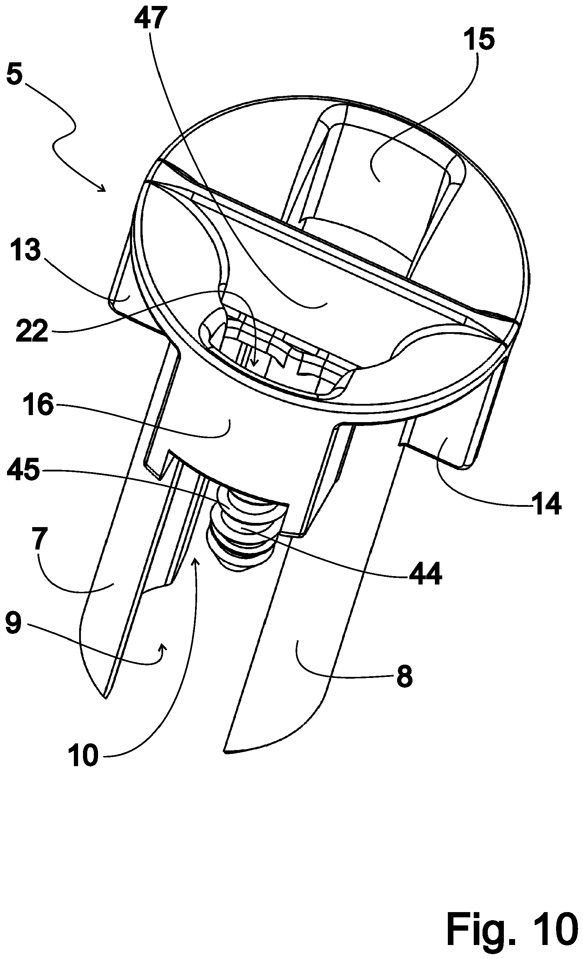

Fig. 10 zeigt in einer perspektivischen Ansicht die Außenhülse 5 bei dem Ausführungsbeispiel gemäß Fig. 9. Aus Fig. 10 ist ersichtlich, dass die Grobgewindestange 44 an einem Stangensteg 47 angeformt ist, der sich zwischen den Abstützstegen 13, 14 auf der Innenseite der Außenhülse 5 erstreckt.

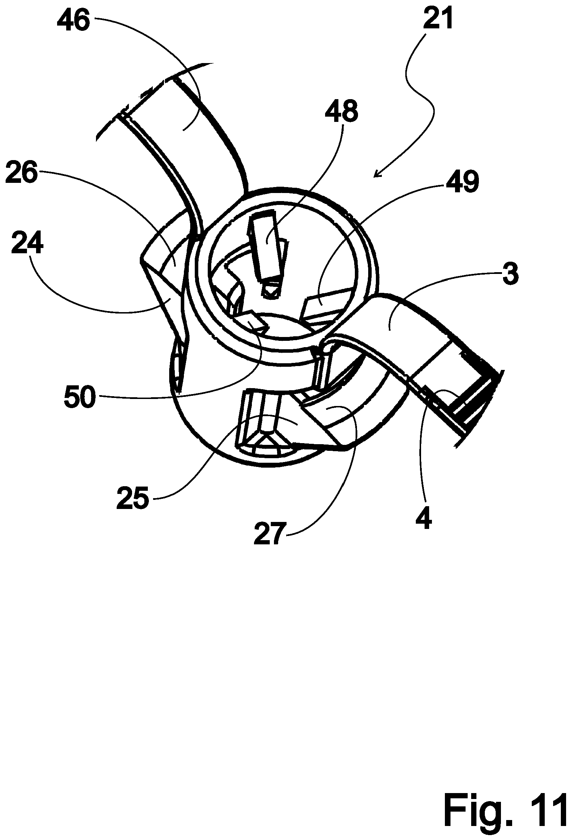

Fig. 11 zeigt in einer perspektivischen Ansicht die Innenhülse 21 bei dem Ausführungsbeispiel gemäß Fig. 9. Aus Fig. 11 ist ersichtlich, dass auf der Innenseite der Innenhülse 21 eine Anzahl von Eingriffszapfen 48, 49, 50 vorhanden sind, die sich von der den Rastschenkeln 24, 25 abgewandten Seite der Innenhülse 21 schräg nach innen in Richtung der Rastschenkel 24, 25 erstrecken.

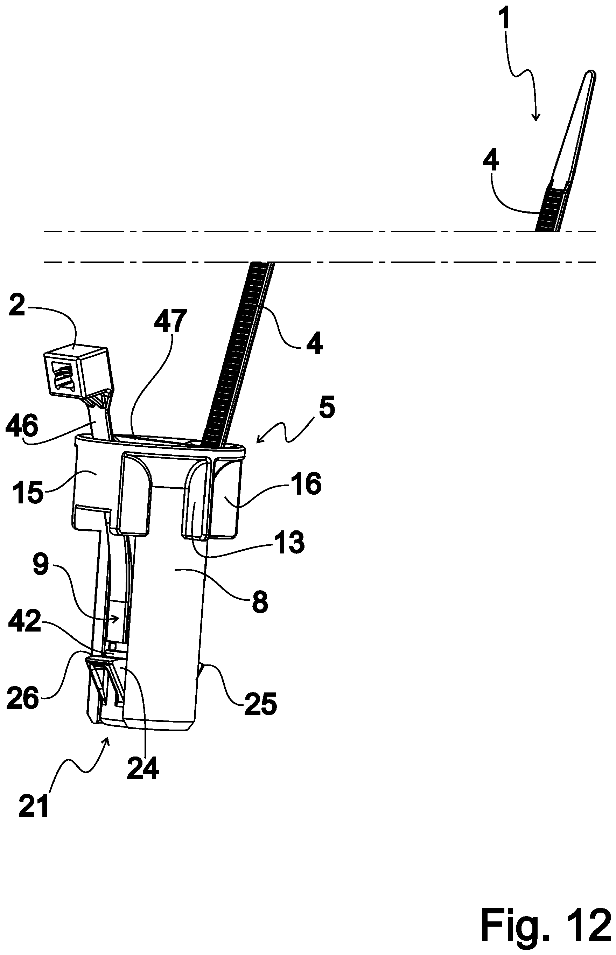

Fig. 12 zeigt in einer perspektivischen Ansicht das Ausführungsbeispiel gemäß Fig. 9 mit der in die Außenhülse 5 eingeschobenen Innenhülse 21 in einer Vormontagestellung. In der Anordnung gemäß Fig. 12 tauchen der Schlossabschnitt 46, der in der Darstellung gemäß Fig. 12 nicht sichtbare glatte Bandabschnitt 3 sowie ein Teil des mit Zähnen versehenen Bandabschnittes 4 in den hohlen Bereich der Abstützsockel 15, 16 ein und treten beidseitig des Stangensteges 47 auf der den Fußzungen 7, 8 abgewandten Seite aus der Außenhülse 5 heraus.

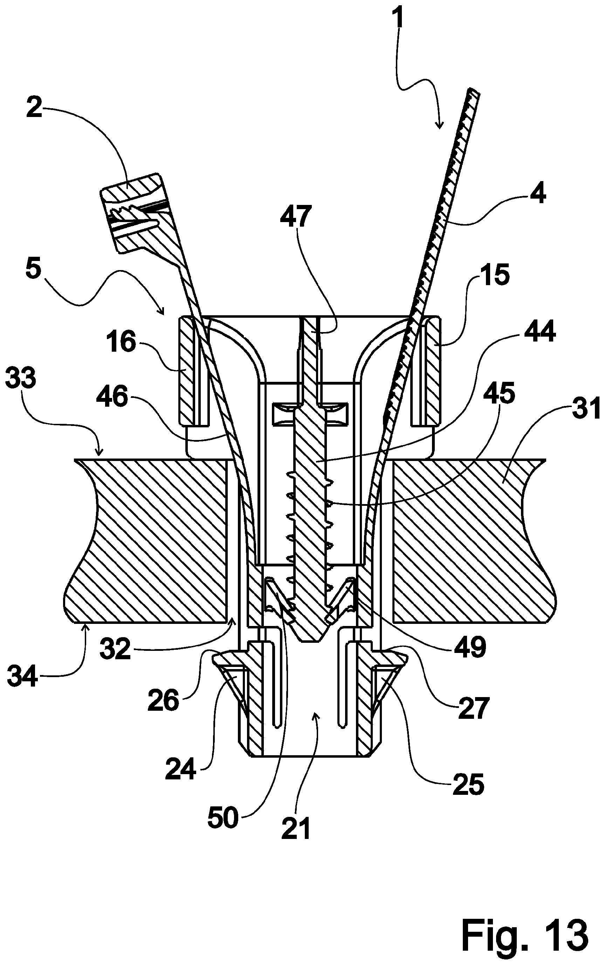

Fig. 13 zeigt in einer Schnittansicht das Ausführungsbeispiel gemäß Fig. 9 in der Vormontagestellung gemäß Fig. 12 in einer in einer Einsteckausnehmung 32 eines Trägerteiles 31 eingefügten Anordnung. Aus Fig. 13 ist ersichtlich, dass in der Vormontagestellung die Eingriffszapfen 48, 49, 50 im Bereich des freien Endes der Grobgewindestange 44 die Außengewindestruktur 45 hintergreifen und somit die Innenhülse 21 an der Außenhülse 5 sichern. In der Vormontagestellung gemäß Fig. 13 weisen die Hintergriffsflächen 26, 27 der Rastschenkel 24, 25 entsprechend der Anordnung gemäß Fig. 7 einen Abstand von der Rückseite 34 des Trägerteiles 31 auf, so dass die erfindungsgemäße Vorrichtung mit einem gewissen Spiel in der Einsteckausnehmung 32 durch die Abstützstege 13, 14, die Abstützsockel 15, 16 sowie die Rastschenkel 24, 25 gesichert angeordnet ist.

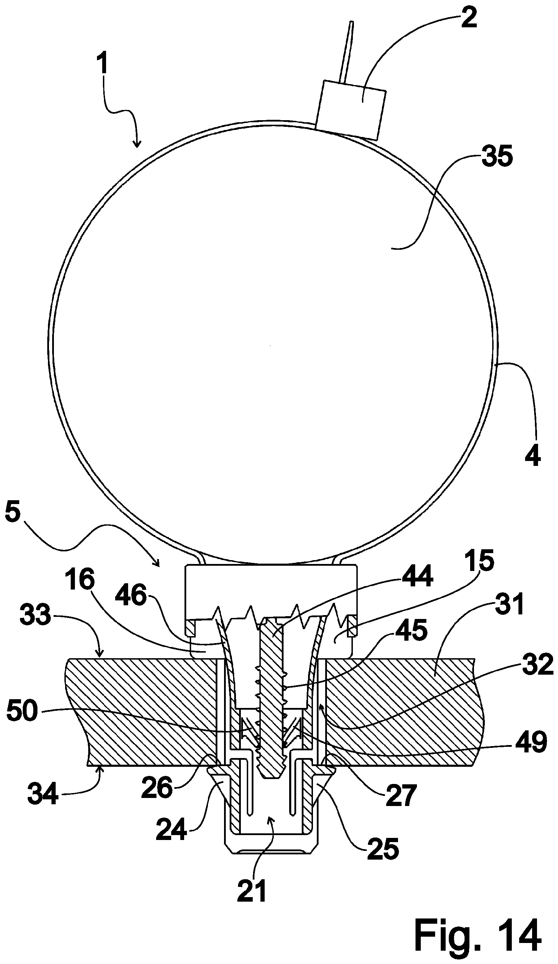

Fig. 14 zeigt in einer Schnittansicht die Anordnung gemäß Fig. 13 mit dem ein Kabelbündel 35 umschlingenden Kabelband 1, wobei bei Spannen des Kabelbandes 1 entsprechend der Anordnung gemäß Fig. 8 die Hintergriffsflächen 26, 27 der Rastschenkel 24, 25 an der Rückseite 34 des Trägerteiles 31 im Randbereich der Einsteckausnehmung 32 anliegen und die Rastschenkel 24, 25 mit dem Trägerteil 31 verspannt sind, wobei zum Einnehmen dieser verspannten Anordnung die Eingriffszapfen 48, 49, 50 die Außengewindestruktur 45 gegenüber der Vorfixierstellung gemäß Fig. 13 in einem in Längsrichtung weiter mittig liegenden Bereich der Grobgewindestange 44 hintergreifen. Dadurch ist sichergestellt, dass auch bei einer gewissen Lockerung der Spannung des Kabelbandes 1 beispielsweise durch alterungs- oder belastungsbedingte Verringerung des Querschnittes des Kabelbündels 35 die erfindungsgemäße Vorrichtung allenfalls mit einem geringen Spiel in der Einsteckausnehmung 32 verankert bleibt.

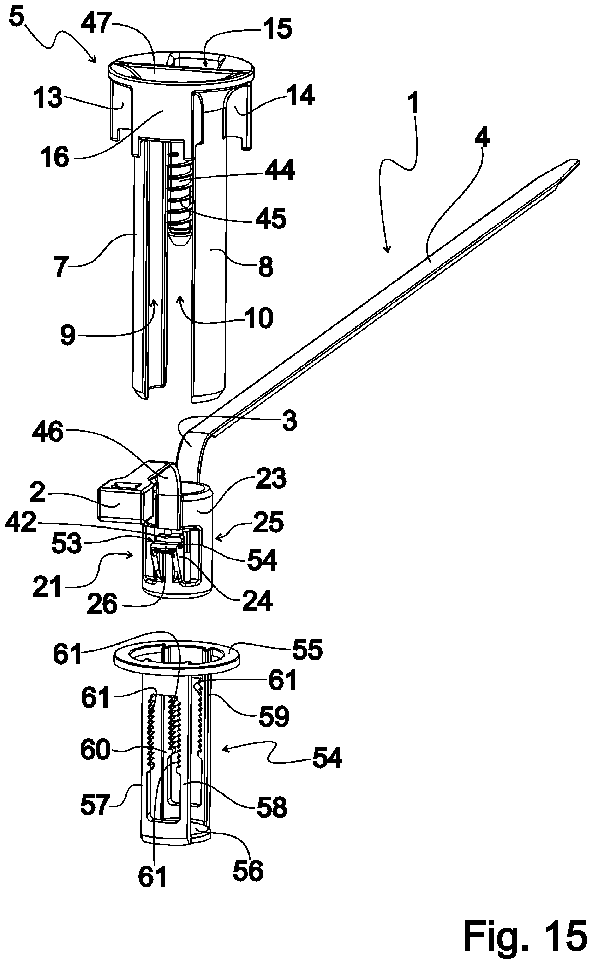

Fig. 15 zeigt in einer perspektivischen Ansicht ein weiteres Ausführungsbeispiel einer erfindungsgemäßen Vorrichtung, wobei sich bei dem Ausführungsbeispiel gemäß Fig. 1 bis Fig. 4, dem Ausführungsbeispiel gemäß Fig. 5 bis Fig. 8, dem Ausführungsbeispiel gemäß Fig. 9 bis Fig. 14 und dem Ausführungsbeispiel gemäß Fig. 15 einander entsprechende Elemente mit den gleichen Bezugszeichen versehen und im weiteren zum Teil nicht weiter näher erläutert sind. Das Ausführungsbeispiel gemäß Fig. 15, das mit einer Außenhülse 5 und einer Innenhülse 21 ausgestattet ist, die im Wesentlichen identisch der Außenhülse 5 und der Innenhülse 21 des anhand Fig. 9 bis Fig. 14 erläuterten Ausführungsbeispiels aufgebaut sind, weist gegenüber dem Ausführungsbeispiel einer erfindungsgemäßen Vorrichtung gemäß Fig. 9 bis Fig. 14 einen Rastkäfig 54 der Vorfixiermittel auf. Der Rastkäfig 54 verfügt über einen Kopfring 55 und eine Bodenplatte 56, die in einem Abstand voneinander angeordnet sind und zwischen denen sich vier Streben 57, 58, 59, 60 erstrecken.

Lediglich bei der Innenhülse 21 sind in Abweichung von der Innenhülse 21 bei dem Ausführungsbeispiel gemäß Fig. 9 bis Fig. 14 an den Rastschenkeln 24, 25 seitlich abstehende Feinfixiernasen 52, 53 ausgebildet.

Die Streben 57, 58, 59, 60 weisen paarweise aufeinander zu gerichtete Eingriffszahnstrukturen 61 auf.

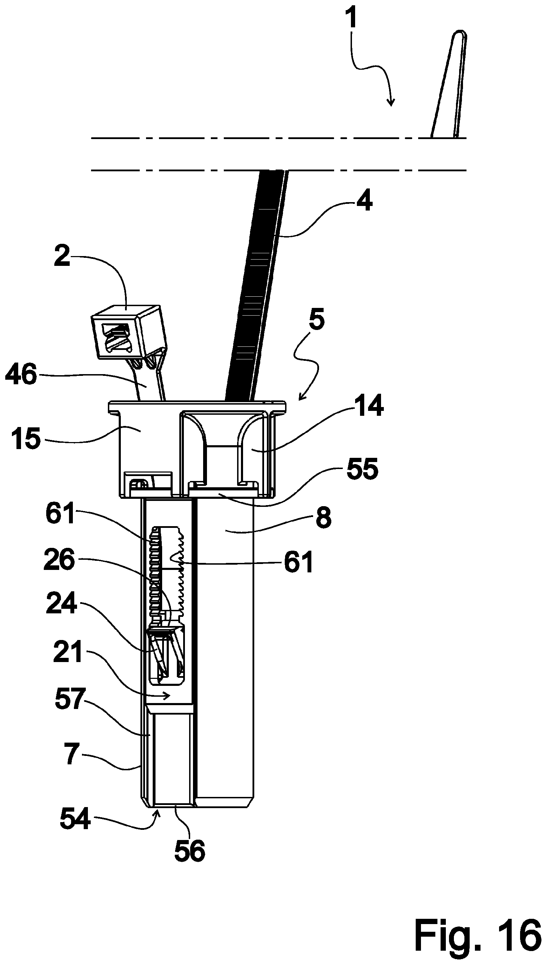

Fig. 16 zeigt in einer perspektivischen Ansicht das Ausführungsbeispiel gemäß Fig. 15 mit der Außenhülse 5, der Innenhülse 21 und dem Rastkäfig 54 in einer zusammengefügten Vormontageanordnung, in der entsprechend der Anordnung gemäß Fig. 12 die Innenhülse 21 in die Außenhülse 5 eingeschoben ist, wobei der Rastkäfig 54 auf die Außenhülse 5 so aufgeschoben ist, dass die Rastschenkel 24, 25 zwischen zwei Streben 57, 58, 59, 60 liegen, deren Eingriffszahnstrukturen 61 aufeinander zu weisend ausgerichtet sind.

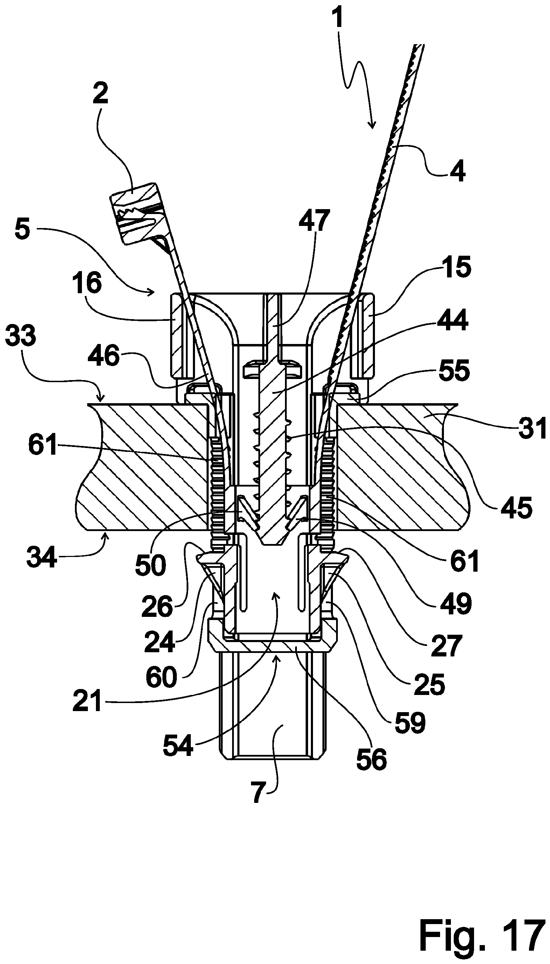

Fig. 17 zeigt in einer Schnittansicht die Anordnung gemäß Fig. 16 in einer in eine Einsteckausnehmung 32 eines Trägerteiles 31 eingefügten Position, in der das erfindungsgemäße Ausführungsbeispiel entsprechend den Erläuterungen bei Fig. 13 mit einem gewissen Spiel gesichert ist. In der Anordnung gemäß Fig. 17 ist nach Einfügen der erfindungsgemäßen Vorrichtung in die Einsteckausnehmung 32 der Rastkäfig 54 gegenüber der Stellung von Fig. 16 in Richtung der Abstützstege 13, 14 und der Abstützsockel 15, 16 verschoben worden und liegt auf der Deckseite 33 des Trägerteiles 31 auf. Diese Verschiebung wird durch eine entsprechende angeschrägte Ausgestaltung der Feinfixiernasen 52, 53, die dieser Bewegung einen verhältnismäßig geringen Widerstand entgegensetzt, ermöglicht.

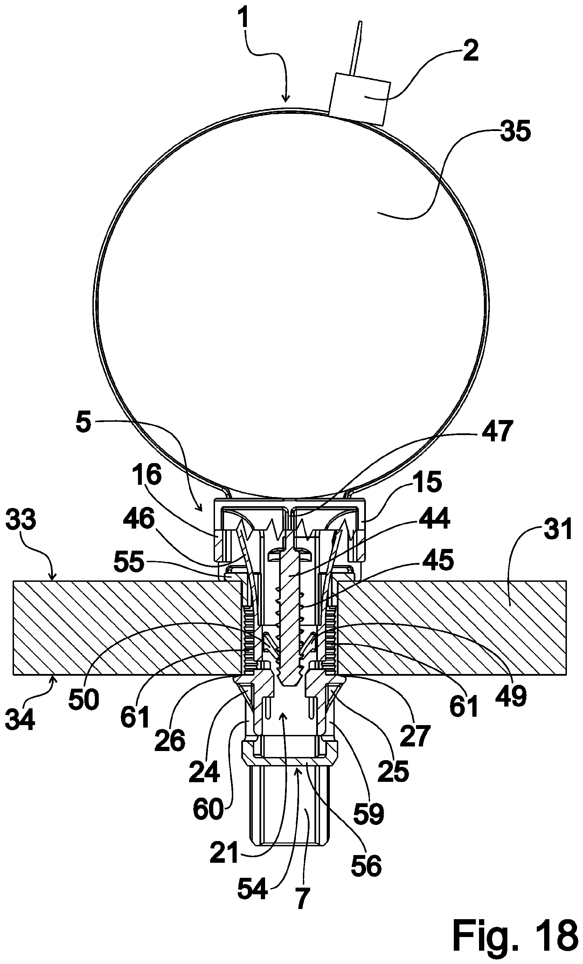

Fig. 18 zeigt die Anordnung gemäß Fig. 17 bei dem Ausführungsbeispiel gemäß Fig. 15 mit dem ein Kabelbündel 35 umschlingenden Kabelband 1 und der Innenhülse 21 in einer Endmontagestellung, in der entsprechend den Erläuterungen von Fig. 14 die Eingriffszapfen 48, 49, 50 in einem gegenüber der Vorfixierstellung in Längsrichtung in Richtung der Mitte der Grobgewindestange 44 versetzten Bereich an der Außengewindestruktur 45 anliegen. Weiterhin greifen in der Anordnung gemäß Fig. 18 die Feinfixiernasen 52, 53 in die Eingriffszahnstrukturen 61 der Streben 57, 58, 59, 60 ein, so dass dadurch bei einer entsprechend eingerichteten Ausgestaltung der Feinfixiernasen 52, 53 einer der bei Nachlassen der Spannung des Kabelbandes 1 einsetzenden Relaxationsbewegung bereits nach einem sehr kurzen Weg ein Widerstand entgegengesetzt wird, der zu einem weiterhin sehr festen Verspannen der erfindungsgemäßen Vorrichtung an dem Trägerteil 31 führt. Zweckmäßigerweise ist die Eingriffszahnstruktur 61 gegenüber der Außengewindestruktur 45 deutlich feiner ausgebildet, so dass die Verspannung selbst bei einer nur geringfügigen Lockerung des Kabelbandes 1 im Wesentlichen erhalten bleibt.

## Patentansprüche

1. Vorrichtung zum Befestigen eines Kabelbandes (1) an einem Trägerteil (31) mit einem in eine in dem Trägerteil (31) eingebrachte Einsteckausnehmung (32) einsteckbaren, das Kabelband (1) tragenden Befestigungskörper (5, 21), an dem wenigstens ein federnder Rastschenkel (24, 25) zum Hintergreifen der Einsteckausnehmung (32) ausgebildet ist, wobei der Befestigungskörper eine Außenhülse (5) sowie eine in die Außenhülse (5) eingeschobene sowie in der Außenhülse (5) verschiebbare Innenhülse (21) aufweist und wobei die Innenhülse (21) das Kabelband (1) trägt sowie den oder jeden Rastschenkel (24, 25) aufweist, **dadurch gekennzeichnet, dass** das Kabelband (1) so an der Innenhülse (21) angebracht ist, dass bei Anziehen des Kabelbandes (1) die Innenhülse (21) in Richtung der einer Deckseite (33) eines Trägerteils (31) abgewandten Seite der Außenhülse (5) gezogen wird und dadurch die Rastschenkel (24, 25) gegen das Trägerteil (31) verspannt werden.

2. Vorrichtung nach Anspruch 1, **dadurch gekennzeichnet, dass** Vorfixiermittel (11, 12, 28, 29; 44, 48, 49, 50; 53, 54, 61) vorhanden sind, die die Außenhülse (5) sowie die Innenhülse (21) in einer Vormontagestellung lösbar miteinander verbinden.

3. Vorrichtung nach Anspruch 2, **dadurch gekennzeichnet, dass** die Innenhülse (21) ausgehend von der Vormontagestellung nach Lösen der Vorfixiermittel (11, 12, 28, 29; 44, 48, 49, 50; 53, 54, 61) gegenüber der Außenhülse (5) verschiebbar ist.

4. Vorrichtung nach Anspruch 3, **dadurch gekennzeichnet, dass** der oder jeder Rastschenkel (24, 25) in einer sich in Längsrichtung der Außenhülse (5) erstreckenden Schenkelaufnahmeausnehmung (9, 10) angeordnet ist.

5. Vorrichtung nach einem der Ansprüche 2 bis 4, **dadurch gekennzeichnet, dass** die Vorfixiermittel wenigstens eine an der Innenhülse (21) ausgebildete Vorfixiernase (28, 29) aufweisen.

6. Vorrichtung nach Anspruch 5, **dadurch gekennzeichnet, dass** die oder jede Vorfixiernase (28, 29) an einem ihr zugeordneten Rastschenkel (24, 25) angeordnet ist.

7. Vorrichtung nach Anspruch 4, **dadurch gekennzeichnet, dass** die oder jede Vorfixiernase (28, 29) an einem ihr zugeordneten federnden Nasenschenkel (40, 41) angeordnet ist.

8. Vorrichtung nach Anspruch 6 oder Anspruch 7, **dadurch gekennzeichnet, dass** die Vorfixiermittel für die oder jede Vorfixiernase (28, 29) einen an der Außenhülse (5) ausgebildeten Vorfixierschlitz (11, 12) aufweisen.

9. Vorrichtung nach einem der Ansprüche 2 bis 5, **dadurch gekennzeichnet, dass** die Vorfixiermittel einen Rastkäfig (54) und an der Innenhülse (21) ausgebildete Feinfixiernasen (53, 54) aufweisen, die mit einer an dem Rastkäfig (54) ausgebildeten Eingriffszahnstruktur (61) in Eingriff sind.

10. Vorrichtung nach einem der Ansprüche 2 bis 9, **dadurch gekennzeichnet, dass** die Vorfixiermittel eine längliche Eingriffstange (44) und wenigstens einen mit der Eingriffstange (44) in Eingriff kommenden Eingriffszapfen (48, 49, 50) aufweist, wobei die Eingriffstange (44) und der oder jeder Eingriffszapfen (48, 49, 50) zum Einnehmen der Vormontagestellung relativ zueinander verschiebbar sind.

11. Vorrichtung nach Anspruch 10, **dadurch gekennzeichnet, dass** die Eingriffstange (44) an der Außenhülse (5) und der oder jeder Eingriffszapfen (48, 49, 50) an der Innenhülse (21) ausgebildet sind.

12. Vorrichtung nach Anspruch 10 oder Anspruch 11, **dadurch gekennzeichnet, dass** die Eingriffstange (44) eine Außengewindestruktur (45) aufweist.

13. Vorrichtung nach einem der Ansprüche 1 bis 12, **dadurch gekennzeichnet, dass** die Innenhülse (21) eine Kabelbandaufnahmebrücke (30) aufweist, in die ein Kabelband (1) einfügbar ist.

14. Vorrichtung nach einem der Ansprüche 1 bis 12, **dadurch gekennzeichnet, dass** ein Kabelband (1) fest mit der Innenhülse (21) verbunden ist.

## Claims

1. Device to fix a cable tie (1) on a support section (31) by means of a fixing body (5, 21) holding the cable tie (1) and insertable into an insertion recess (32) made in the support section (31), wherein at least one resilient latching leg (24, 25) is formed on said fixing body to latch behind the insertion recess (32), wherein the fixing body has an outer sleeve (5) and an inner sleeve (21) slid into the outer sleeve (5) and able to move in the outer sleeve (5) and wherein the inner sleeve (21) holds the cable tie (1) as well as the, or each, latching leg (24, 25), **characterised in that** the cable tie (1) is placed in the inner sleeve (21) such that, when the cable tie (1) is pulled, the inner sleeve (21) is drawn in the direction of the side of the outer sleeve (5) facing away from a top side (33) of a support section (31) and consequently the latching legs (24, 25) are braced against the support section (31).

2. Device according to claim 1, **characterised in that** pre-fixing means (11, 12, 28, 29; 44, 48, 49, 50; 53, 54, 61) are present which connect the outer sleeve (5) and the inner sleeve (21) detachably to each other in a pre-assembly position.

3. Device according to claim 2, **characterised in that** the inner sleeve (21), starting from the pre-assembly position, can be moved in relation to the outer sleeve (5) after releasing the pre-fixing means (11, 12, 28, 29; 44, 48, 49, 50; 53, 54, 61).

4. Device according to claim 3, **characterised in that** the, or each latching leg (24, 25) is arranged in a leg-receiving recess (9, 10) extending in the longitudinal direction of the outer sleeve (5).

5. Device according to any one of claims 2 to 4, **characterised in that** the pre-fixing means have at least one pre-fixing lug (28, 29) formed on the inner sleeve (21).

6. Device according to claim 5, **characterised in that** the, or each pre-fixing lug (28, 29) is arranged on one of its associated latching legs (24, 25).

7. Device according to claim 4, **characterised in that** the, or each pre-fixing lug (28, 29) is arranged on one of its associated resilient lug legs (40, 41).

8. Device according to claim 6 or claim 7, **characterised in that** the pre-fixing means for the, or each pre-fixing lug (28, 29) has a pre-fixing slot (11, 12) formed on the outer sleeve (5).

9. Device according to any one of claims 2 to 5, **characterised in that** the pre-fixing means have a latching cage (54) and fine latching lugs (53, 54) provided on the inner sleeve (21) which engage with an engagement tooth structure (61) provided on the latching cage (54).

10. Device according to any one of claims 2 to 9, **characterised in that** the pre-fixing means have an elongated engagement rod (44) and at least one engagement pin (48, 49, 50) engaging with the engagement rod (44), wherein the engagement rod (44) and the, or each engagement pin (48, 49, 50) are movable relative to each other to take up the pre-assembly position.

11. Device according to claim 10, **characterised in that** the engagement rod (44) is provided on the outer sleeve (5) and the, or each engagement pin (48, 49, 50) is provided on the inner sleeve (21).

12. Device according to claim 10 or claim 11, **characterised in that** the engagement rod (44) has an external thread structure (45).

13. Device according to any one of claims 1 to 12, **characterised in that** the inner sleeve (21) has a cable tie receiving bridge (30) into which a cable tie (1) can be inserted.

14. Device according to any one of claims 1 to 12, **characterised in that** a cable tie (1) is connected permanently to the inner sleeve (21).

## Revendications

1. Dispositif de fixation d'une attache de câble (1) à une partie support (31) avec un corps de fixation (5, 21) portant l'attache de câble (1), encliquetable dans un évidement d'insertion (32) introduit dans la partie support (31), sur lequel au moins un bras élastique d'encliquetage (24, 25) est conçu pour venir en prise derrière l'évidement d'insertion (32), ledit corps de fixation présente un manchon extérieur (5) de même qu'un manchon intérieur (21) introduit dans le manchon extérieur (5) et mobile dans le manchon intérieur (21), et dans lequel le manchon intérieur porte l'attache de câble (1) et présente le ou chaque bras d'encliquetage (24, 25), **caractérisé en ce que** l'attache de câble (1) est montée sur le manchon intérieur (21), que lorsque l'on serre l'attache de câble (1), le manchon intérieur (21) est tiré dans la direction d'un côté du manchon extérieur (5) tournant le dos à un côté supérieur (33) d'une partie support (31) et ainsi les bras d'encliquetage (24, 25) sont serrés contre la partie support (31).

2. Dispositif selon la revendication 1, **caractérisé en ce que** des moyens de préfixation (11, 12, 28, 29, 44, 48, 49, 50; 53, 54, 61) sont présents, pour relier de manière amovible le manchon extérieur (5) et le manchon intérieur (21) dans une position de pré-assemblage.

3. Dispositif selon la revendication 2, **caractérisé en ce que** le manchon intérieur (21) peut être déplacé à partir de la position de pré-assemblage après avoir dévissé les moyens de préfixation (11, 12, 28, 29, 44, 48, 49, 50; 53, 54, 61) par rapport au manchon extérieur (5).

4. Dispositif selon la revendication 3, **caractérisé en ce que** le ou chaque bras d'encliquetage (24, 25) sont agencés dans un évidement pour réceptacle des bras (9,10) s'étendant dans une direction longitudinale du manchon extérieur (5).

5. Dispositif selon l'une des revendications 2 à 4, **caractérisé en ce que** les moyens de préfixation présentent au moins un tenon de préfixation (28, 29) formé sur le manchon intérieur (21).

6. Dispositif selon la revendication 5, **caractérisé en ce que** le ou chaque tenon de préfixation (28, 29) est agencé sur des bras d'encliquetage (24, 25) affectés audit tenon de fixation.

7. Dispositif selon la revendication 4, **caractérisé en ce que** le ou chaque tenon de préfixation (28, 29) est agencé sur un bras de tenon à ressort (40, 41) affecté audit tenon de fixation.

8. Appareil selon la revendication 6 ou la revendication 7, **caractérisé en ce que** les moyens de préfixation pour le ou chaque tenon de préfixation (28, 29) présentent une fente de préfixation (11, 12) formée sur le manchon extérieur (5).

9. Dispositif selon l'une des revendications 2 à 5, **caractérisé en ce que** les moyens de préfixation présentent une cage de verrouillage (54) et des tenons de préfixation fine (53, 54) formés sur le manchon intérieur (21), tenons qui sont en prise entre la structure d'engrènement (61) formée sur la cage de verrouillage (54).

10. Dispositif selon l'une des revendications 2 à 9, **caractérisé en ce que** les moyens de préfixation présentent une tige de mise en prise allongée (44) et au moins un tourillon de mise en prise (48, 49, 50) venant en prise avec la tige de mise en prise (44), dans lequel la tige de mise en prise (44) et le ou chaque tourillon de mise en prise (48, 49, 50) peuvent être déplacés l'un par rapport à l'autre pour adopter la position le pré-assemblage.

11. Dispositif selon la revendication 10, **caractérisé en ce que** la tige de mise en prise (44) est agencée sur le manchon extérieur (5) et le ou chaque tourillon de mise en prise (48, 49, 50) sont agencés sur le manchon intérieur (21).

12. Appareil selon la revendication 10 ou la revendication 11, **caractérisé en ce que** la tige de mise en prise (44) présente une structure de filetage extérieure (45).

13. Dispositif selon l'une des revendications 1 à 12, **caractérisé en ce que** le manchon intérieur (21) présente un pont de réception d'attache de câble (30), dans lequel on peut introduire une attache de câble (1).

14. Dispositif selon l'une des revendications 1 à 12, **caractérisé en ce qu'**une attache de câble (1) est fixée à demeure sur le manchon intérieur (21).
